# EUROPÄISCHE PATENTSCHRIFT

(11) **EP 2 792 855 B1**
(45) Veröffentlichungstag und Bekanntmachung des Hinweises auf die Patenterteilung: **10.10.2018**
(21) Anmeldenummer: 13164289.4
(22) Anmeldetag: 18.04.2013
(51) Int. Cl.: F01D 25/16, F02B 39/00, F02C 6/12

(54) **Inneres Lagergehäuse eines Abgasturboladers**
Inner bearing block of an exhaust gas turbocharger
Support de palier interieur d'un turbocompresseur

(43) Veröffentlichungstag der Anmeldung: 22.10.2014
(73) Patentinhaber: ABB Turbo Systems AG, 5400 Baden (CH)
(72) Erfinder: Oeschger, Daniel, 5430 Wettingen (CH); Rechin, Thomas, 5400 Baden (CH)
(74) Vertreter: ABB Patent Attorneys

(56) Entgegenhaltungen:
- EP-A2- 1 057 978
- JP-A- H09 217 630
- JP-A- H09 217 631
- JP-A- S61 142 328
- US-A- 4 376 617

## Beschreibung

### Technisches Gebiet

Die Erfindung bezieht sich auf das Gebiet der mit Abgasen von Brennkraftmaschinen beaufschlagten Turbolader.

Sie betrifft das innere Lagergehäuse eines als Einheit aus einem Abgasturbolader ausbaubaren Rotorblocks, einen als Einheit aus einem Abgasturbolader ausbaubaren Rotorblock mit einem derartigen inneren Lagergehäuse sowie einen Abgasturbolader mit einem derartigen, als Einheit aus dem Abgasturbolader ausbaubaren Rotorblock.

### Stand der Technik

Abgasturbolader werden zur Leistungssteigerung von Hubkolbenmotoren eingesetzt. Diese Abgasturbolader verwenden eine Turbine welche über eine Welle ein Verdichterrad antreibt. Bei Abgasturboladern mit axial angeströmten Abgasturbinen ist der Turbinendiffusor in der Regel mechanisch - etwa über eine feste Schraubverbindung - mit dem Gasaustrittsgehäuse der Turbine gekoppelt. Dadurch entsteht die Notwendigkeit, beim Ausbau des Turbinenrades in Richtung des Verdichters den Turbinendiffusor vorab vom Gasaustrittsgehäuse zu lösen, was insbesondere bei eingerosteten oder anderswie verklemmten Befestigungsmitteln oder allein aufgrund der Zugänglichkeit der zu lösenden Befestigungsmittel durch die Öffnung im Lagergehäuse eine mühsame und zeitintensive Arbeit sein kann. Um den Ausbau sämtlicher, der Abgasströmung ausgesetzter Teile eines Abgasturboladers bei der Wartung zu vereinfachen, soll der gesamte Rotorblock - also alle rotierenden Teile und zugehörige Lagerbereiche - als Einheit aus dem Turboladergehäuse herausgenommen werden können.

Ein entsprechendes Konzept, allerdings für Abgasturbolader mit Radialturbinen, wird in EP1057978 vorgestellt. Darin wird ein Abgasturbolader beschrieben, welcher vier Grundbestandteile aufweist. Diese sind: das Turbinengehäuse, das Verdichtergehäuse, einen auswechselbaren Rotorblock (Cartridge) und ein zwischen Turbinengehäuse und Verdichtergehäuse angeordnetes Lagergehäuse. Der Rotorblock umfasst ein Verdichterrad und einen Turbinenrotor, die gemeinsam auf einer Welle montiert sind sowie Lager für die Wellenlagerung. Der auswechselbare Rotorblock weist Ölkanäle auf, die für die Zufuhr von Schmieröl an die Lager der Welle vorgesehen sind, und eine Ölableitung für das aus den Lagern austretende Öl. Die Ölkanäle und die Ableitung enden an einer axialen Stirnfläche des auswechselbaren Rotorblocks. Das Lagergehäuse weist eine Ölzufuhrleitung auf, die an einer ersten Stirnfläche endet und die so angepasst ist, dass sie mit dem Ölkanal im Rotorblock in Verbindung steht, wenn der auswechselbare Einsatz an der ersten Stirnfläche des Lagergehäuses befestigt ist. Das Lagergehäuse weist auch eine Ölabflussleitung auf, die an der ersten Stirnfläche endet und so vorgesehen ist, dass sie mit der Ölabflussleitung in Verbindung steht. Das Gehäuse weist O-Ring-Ölabdichtungen auf, die dazu vorgesehen sind, die Ölkanäle und Ölabflussleitungen abzudichten.

JP H09 217631 A offenbart ein Abgasturbolader mit einem inneren Lagergehäuse, mit jeweils einer Öffnung zum Zu- oder Abführen von Schmieröl, wobei diese Öffnungen in axialen Stirnflächen des inneren Lagergehäuses angeordnet sind.

### Kurze Darstellung der Erfindung

Die Aufgabe der vorliegenden Erfindung besteht darin, einen Abgasturbolader mit einem als Einheit aus dem Gehäuse ausbaubaren Rotorblock zu schaffen, bei welchem die kundenseitigen Anschlüsse für Betriebsmedien, wie Kühlluft, Schmieröl oder Kühlwasser während eines Service unangetastet bleiben können.

Erfindungsgemäss wird dies erreicht, indem die Durchführungen aller Betriebsmedien, wie Kühlluft, Schmieröl oder Kühlwasser vom äusseren Lagergehäuse zum Rotorblock axial und vorteilhafterweise innerhalb einer Schnittstelle ausgeführt sind.

Dadurch reduziert gegenüber der radial getrennten Durchführungen das Risiko einer Fehlmontage. Sind alle Durchführungen innerhalb einer Schnittstelle realisiert, reduziert sich gegenüber den auf mehrere Schnittstellen verteilten Durchführungen der zeitliche Aufwand bei der Montage des Rotorblocks.

Erfindungsgemäss werden bei der Montage des Rotorblocks alle Zuführungen der Betriebsmedien zum inneren Lagergehäuse des Rotorblocks mittels einer Hauptkraftschlussverbindung sichergestellt. Dies erhöht die Montagesicherheit und damit die Dichtheit im Betrieb des Abgasturboladers, da die Dichtung optimal verpresst werden kann. Diese optimale Verpressung wird erreicht indem die Dichtebene normal zu einem Kraftschlusselement, beispielsweise einer Schraube, ausgerichtet ist. Dabei werden alle Durchführungen für die Betriebsmedien (Schmieröl Kühlwasser, Kühlluft, etc.) in der Schnittstelle zwischen dem äusseren Lagergehäuse und dem inneren Lagergehäuse des Rotorblocks integriert. Durch diese eine Übergabeschnittstelle kann die funktionsgerechte Montage und damit die Dichtheit im Betrieb gewährleistet werden, indem der Sitz der Lagerbüchse im Lagergehäuse bei der Montage kontrolliert wird. Ein gezieltes Überprüfen je Dichtstelle entfällt. Optimalerweise werden die O-Ringe für die Dichtung am stehenden Bauteil, also am äusseren Lagergehäuse, montiert. Optional können sie jedoch auch am inneren Lagergehäuse des Rotorblocks montiert sein.

Weitere Vorteile ergeben sich aus den abhängigen Ansprüchen oder sind der detaillierten Beschreibung der Ausführungsbeispiele zu entnehmen.

### Kurze Beschreibung der Zeichnungen

Nachfolgend werden verschiedene Ausführungsformen der Erfindung anhand von Zeichnungen detailliert erläutert. Hierbei zeigt
- Fig. 1: einen Axialschnitt durch einen Abgasturboladers gemäss dem Stand der Technik, mit einem als Einheit aus dem Lagergehäuse ausbaubaren Rotorblock, welcher neben den rotierenden Bauteilen auch ein inneres Lagergehäuse umfasst,
- Fig. 2: eine Ansicht von der Turbinenseite auf das erfindungsgemäss ausgebildete innere Lagergehäuse eines Abgasturboladers nach Fig. 1 (rechte Hälfte der Figur illustriert die Ansichtsrichtung der Darstellung in der linken Hälfte),
- Fig. 3: einen entlang der Schnittlinien III-III (Fig. 2) geführten Axialschnitt durch einen Abgasturbolader mit einem Rotorblock mit einem erfindungsgemäss ausgebildeten inneren Lagergehäuse, und
- Fig. 4: einen entlang der Schnittlinien IV-IV (Fig. 2) geführten Axialschnitt durch einen Abgasturbolader mit einem Rotorblock mit einem erfindungsgemäss ausgebildeten inneren Lagergehäuse.

### Weg zur Ausführung der Erfindung

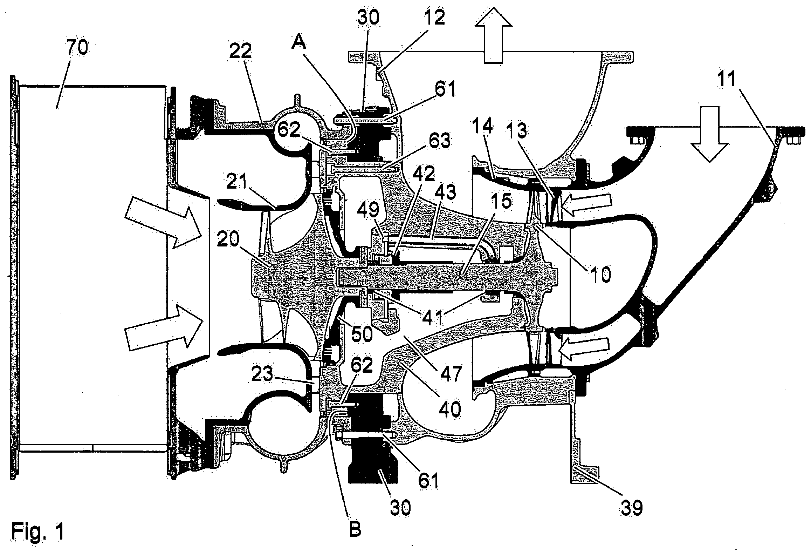

Fig. 1 zeigt einen Abgasturbolader mit einem als Einheit ausbaubaren Rotorblock. Der dargestellte Abgasturbolader umfasst einen Axialturbine, welche ein Radialverdichter antreibt.

Das Turbinengehäuse umfasst ein Gaseintrittsgehäuse 11 sowie ein Gasaustrittsgehäuse 12. Der Abgasstrom ist mittels Pfeilen angedeutet. Das Turbinenrad weist eine Vielzahl von Laufschaufeln auf, welche auf einem Nabenkörper angeordnet sind. Stromaufwärts der Laufschaufeln der Turbine ist eine Leitvorrichtung 13, auch Düsenring genannt, zum optimalen Ausrichten der Strömung auf die Laufschaufeln angeordnet. Stromabwärts der Laufschaufeln mündet der Strömungskanal über einen sich radial weitenden Diffusor 14 im spiralförmigen Sammelraum des Gasaustrittsgehäuses.

Verdichterseitig ist das Verdichterrad 20 in einem Verdichtergehäuse angeordnet, welches aus einem äusseren Verdichtergehäuse 22 und einem inneren Verdichtergehäuse 21 zusammengesetzt ist. Die Frischluft wird über einen dem Verdichter vorgeschalteten Filter-Schalldämpfer 70 angesaugt. Die axial angesaugte Strömung wird im Bereich des Verdichterrades in eine Radialströmung umgelenkt, bevor sie in dem Diffusorbereich mit der Leitvorrichtung 23 verlangsamt und anschliessend über den spiralförmigen Sammelraum und den Luftaustritt (nicht dargestellt) den Brennkammern des aufzuladenden Verbrennungsmotors zugeführt wird.

Das äussere Verdichtergehäuse 22 und das Gasaustrittsgehäuse 12 der Abgasturbine sind am dazwischenliegenden äusseren Lagergehäuse 30 befestigt, wobei Verdichtergehäuse und Turbinengehäuse jeweils einzeln oder, wie in der dargestellten Ausführungsform, mit einem gemeinsamen Befestigungsmittel 61 (Schraube, Bolzen) am Lagergehäuse festgemacht sein können. Das Verdichtergehäuse ist zweigeteilt, um den Einbau und Ausbau des Rotorblocks zu vereinfachen. Ist der Filterschalldämpfer 70 und das innere Verdichtergehäuse vom restlichen Gehäuse entfernt, liegt die zentrale Öffnung im äusseren Verdichtergehäuse zur Entnahme des Rotorblocks frei. Dabei müssen das äussere Verdichtergehäuse 22, das äussere Lagergehäuse 30 und die Gehäuseteile 11 und 12 des Turbinengehäuses nicht demontiert werden, wodurch insbesondere auch allfällige Isolationsverschalungen und die Anschlüsse für die Betriebsmedien, wie Kühlluft, Schmieröl oder Kühlwasser unangetastet bleiben können.

Der Rotorblock umfasst die rotierenden Bauteile sowie die zugehörigen Lagerbereiche. Das innere Lagergehäuse 40 ist Bestandteil des Rotorblocks und weist eine zentrale, durchgehende Öffnung zur Aufnahme der Welle 15 auf. Das innere Lagergehäuse kann mehrteilig zusammengesetzt sein oder aus einem einigen Gussteil geformt sein. Umfasst der Rotorblock auch die turbinenseitige Leitvorrichtung 13, ist diese über den turbinenseitigen Diffusor 14 mit dem inneren Lagergehäuse verbunden. Hierfür werden nicht dargestellte Streben durch den Strömungskanal geführt. Das Befestigungsmittel 63 deutet an, dass mehrere Einzelteile zum inneren Lagergehäuse zusammengefügt und aneinander befestigt sein können. Auf der Welle sind turbinenseitig das Turbinenrad 10 und verdichterseitig das Verdichterrad 20 angeordnet. Die Lagerbereiche umfassen zwei Radiallager 41 sowie mindestens ein Axiallager 42. Das Axiallager umfasst in der Regel ein Schublager zur Aufnahme der Axialkräfte in die Hauptbelastungsrichtung zum Verdichter hin sowie ein entgegengesetzt wirksames Hilfslager. Die Lagerbereiche werden über Ölzufuhrleitungen 43 innerhalb des inneren Lagergehäuses ausreichlich mit Schmieröl versorgt. Das aus den Lagerbereichen austretende Schmieröl wird im unteren Bereich des inneren Lagergehäuses in einem Ölsammelraum 47 gesammelt und aus dem Gehäuse abgeführt.

Das innere Lagergehäuse 40 des Rotorblocks wird am äusseren Lagergehäuse 30 befestigt. In der Fig. 1 sind entsprechende Befestigungsmittel 62 angedeutet. Dabei liegen inneres und äusseres Lagergehäuse mit jeweils einer axialen Stirnfläche A beziehungsweise B aufeinander.

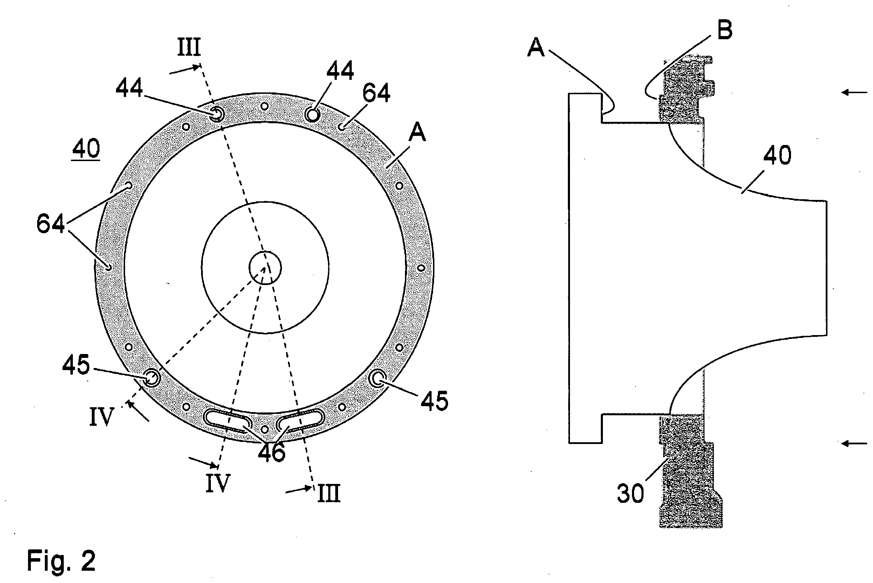

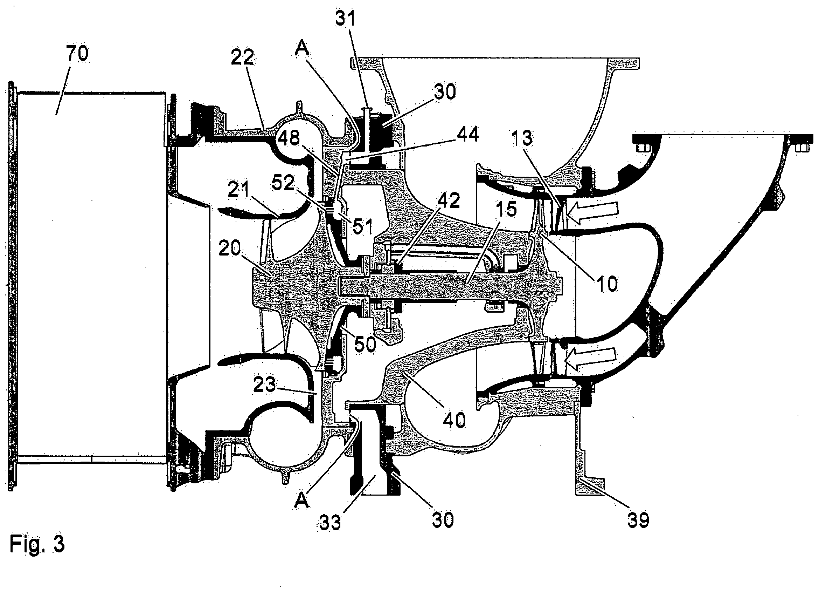

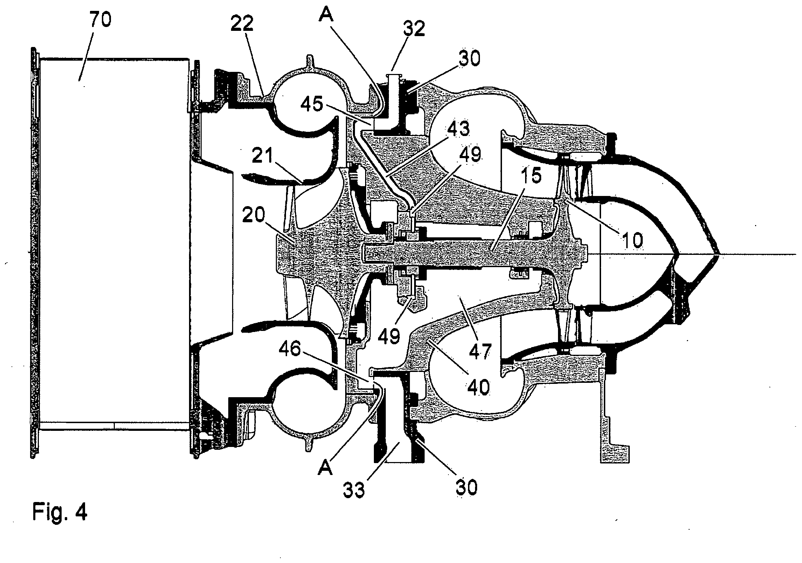

Anhand der Figuren 2 bis 4 wird nun die erfindungsgemässe Schnittstelle der Betriebsmedien, wie Kühlluft, Schmieröl oder Kühlwasser vom äusseren Lagergehäuse zum Rotorblock erläutert. Die Ansicht gemäss Fig. 2 auf das innere Lagergehäuse 40 von dem turbinenseitigen Ende her zeigt die erfindungsgemässe Anordnung der einzelnen Durchführungen. Fig. 3 und Fig. 4 zeigen axial geführte Schnitte entlang der in Fig. 2 mit III-III und IV-IV bezeichneten Schnittlinien. Die in Fig. 3 und Fig. 4 gezeigten Schnitte sind also nicht in einer einzigen Ebene geführt, sondern jeweils im oberen Teil in einer jeweils ersten Ebene durch die jeweiligen Öffnungen für die Sperrluftzufuhr 44 bzw. Ölzufuhr 45 und unterhalb der Achse jeweils in einer zweiten Ebene durch die Ölabflussöffnungen 46. Alle diese Öffnungen liegen in einer axialen Stirnfläche A des inneren Lagergehäuses, welche beim Montieren an eine entsprechende axiale Stirnfläche B am äusseren Lagergehäuse 30 zur Auflage kommt.

Die Öffnung für die Ölzufuhr 45 im inneren Lagergehäuse 40 liegt vorteilhafterweise in der unteren Hälfte, nahe der Öffnung für den Ölabfluss 46. Dadurch lassen sich Ölzufuhr 32 und Ölabfluss 33 im äusseren Lagergehäuse zu zusammenführen, dass die beiden Leitungen in einem gemeinsamen Flansch für den externen Anschluss verfügbar sind. Somit kann die Verbindung vom Turbolader zur Ölaufbereitungsanlage mit zwei parallel verlaufenden Ölleitungen realisiert werden. Vorteilhafterweise gibt es beidseits jeweils eine Öffnung 45, beziehungsweise 46, so dass wahlweise die Zuführung und Abführung des Schmieröls von der einen oder anderen Seite des Turboladers erfolgen kann. Im Innern des Rotorblocks verläuft die Ölzufuhrleitung 43 entsprechend Fig. 4 bis zu einer Ölkammer 49 in Form eines umlaufenden, ringförmigen Hohlraums im inneren Lagergehäuse 40. Die Ölkammer 49 liegt in der dargestellten Ausführungsform radial ausserhalb der Radiallager, von wo aus das Schmieröl über weitere Ölzufuhrleitungen an die verschiedenen Lagerstellen weitergeleitet wird. Das aus den Lagerbereichen austretende Schmieröl wird im unteren Bereich des inneren Lagergehäuses 40 in einem Ölsammelraum 47 gesammelt, über die axiale Schnittstelle durch die Öffnung für den Ölabfluss 46 in den Fuss des äusseren Lagergehäuses 30 geleitet und über den Ölabfluss 33 abgeführt.

Die Öffnung für die Sperrluftzufuhr 44 im inneren Lagergehäuse 40 liegt in der dargestellten Ausführungsform im oberen Bereich des Rotorblocks. Wiederum gibt es beidseits einen entsprechenden Anschluss für die Sperrluftzufuhr, um je nach Anbaurichtung des Turboladers die Sperrluftzuführung 31 am äusseren Lagergehäuse auf der einen oder anderen Seite des Turboladers anschliessen zu können. Im Innern des Rotorblocks verläuft die Sperrluftzufuhrleitung 48 entsprechend Fig. 3 bis zu einer Sperrluftkammer 51 in Form eines umlaufenden, ringförmigen Hohlraums zwischen einer Zwischenwand 50 und dem inneren Lagergehäuse 40. Die Sperrluftkammer 51 liegt in der dargestellten Ausführungsform unmittelbar in der Nähe der Spitze der Verdichterrad-Schaufeln, wo einerseits verhindert werden soll, dass Luft aus dem Strömungskanal am Verdichteraustritt in den Lagerbereich strömen soll, und wo andererseits der Wärmeeintrag in die Gehäuseteile am grössten ist. Die Sperrluft wird aus der Sperrluftkammer 51 durch mehrere Sperrluftkanäle 52 in den Spalt zwischen Verdichterrad 20 und Zwischenwand 50 eingeblasen.

Weitere Übergänge für zusätzliche Betriebsmedien, etwa Kühlwasser oder allfällige elektrische Kontaktstellen sind in den Figuren nicht dargestellt. Diese weiteren Übergänge werden erfindungsgemäss analog zu den oben beschriebenen Sperrluftzuführungen realisiert, also mit aufeinander abgestimmten Öffnungen und oder Kontaktstellen im inneren Lagergehäuse und im äusseren Lagergehäuse.

### Bezugszeichenliste

- 10: Turbinenrad
- 11: Gaseintrittsgehäuse der Abgasturbine
- 12: Gasaustrittsgehäuse der Abgasturbine
- 13: Leitvorrichtung, Düsenring (optional Teil des Rotorblocks)
- 14: Turbinendiffusor
- 15: Welle (Teil des Rotorblocks)
- 20: Verdichterrad (Teil des Rotorblocks)
- 21: Inneres Verdichtergehäuse
- 22: Äusseres Verdichtergehäuse
- 23: Leitvorrichtung im Diffusor
- 30: Äusseres Lagergehäuse
- 31: Sperrluftzufuhr
- 32: Ölzufuhr
- 33: Ölabfluss
- 40: Inneres Lagergehäuse (Teil des Rotorblocks)
- 41: Radiallager
- 42: Axiallager (Schublager)
- 43: Ölzufuhrleitung
- 44: Öffnung für Sperrluftzufuhr
- 45: Öffnung für Ölzufuhr
- 46: Öffnung für Ölabfluss
- 47: Ölsammelraum
- 48: Sperrluftzufuhrleitung
- 49: Ölkammer
- 39: Stütze
- 50: Zwischenwand
- 51: Sperrluftkammer
- 52: Sperrluftkanäle
- 61, 62, 63: Befestigungsmittel
- 64: Bohrungen für Befestigungsmittel
- 70: Filterschalldämpfer
- A, B: Axiale Stirnflächen

## Patentansprüche

1. Inneres Lagergehäuse (40) eines Abgasturboladers, mit einer zentralen Öffnung zur Aufnahme einer Welle sowie mit mehreren Öffnungen (44, 45, 46) zum Zu- oder Abführen von verschiedenen Betriebsmedien zum oder vom inneren Lagergehäuse, wobei die Öffnungen (44, 45, 46) zum Zu- oder Abführen von verschiedenen Betriebsmedien in axialen Stirnflächen (A) des inneren Lagergehäuses angeordnet sind, **dadurch gekennzeichnet, dass** jeweilige Öffnungen (44, 45, 46) zum Zu- oder Abführen von verschiedenen Betriebsmedien jeweils in doppelter oder mehrfacher Ausführung vorhanden und auf unterschiedlichen Seiten des inneren Lagergehäuses angeordnet sind.

2. Inneres Lagergehäuse (40) nach Anspruch 1, wobei Öffnungen (45) für die Zufuhr von Schmieröl in der unteren Hälfte des inneren Lagergehäuses angeordnet sind.

3. Rotorblock eines Abgasturboladers, umfassend ein Inneres Lagergehäuse (40) nach einem der Ansprüche 1 oder 2, sowie je ein auf einer im inneren Lagergehäuse drehbar gelagerten Welle angeordnetes Verdichterrad (20) und Turbinenrad (10).

4. Abgasturbolader, umfassend einen Rotorblock nach Anspruch 3, sowie ein äusseres Lagergehäuse (30) mit einer zentralen Öffnung zur Aufnahme des Rotorblocks, wobei in zumindest eine axialen Stirnfläche (B) im äusseren Lagergehäuse Öffnungen zum Zu- oder Abführen von verschiedenen Betriebsmedien zum oder vom inneren Lagergehäuse eingelassen sind.

## Claims

1. Inner bearing housing (40) of an exhaust-gas turbocharger, having a central opening for receiving a shaft and having multiple openings (44, 45, 46) for the supply or discharge of various operating media to or from the inner bearing housing, wherein the openings (44, 45, 46) for the supply or discharge of various operating media are arranged in axial end surfaces (A) of the inner bearing housing, **characterized in that** respective openings (44, 45, 46) for the supply or discharge of various operating media are provided in each case in twofold or manifold configuration and are arranged on different sides of the inner bearing housing.

2. Inner bearing housing (40) according to Claim 1, wherein openings (45) for the supply of lubricating oil are arranged in the lower half of the inner bearing housing.

3. Rotor block of an exhaust-gas turbocharger, comprising an inner bearing housing (40) according to either of Claims 1 and 2, and comprising in each case one compressor wheel (20) and turbine wheel (10) arranged on a shaft mounted rotatably in the inner bearing housing.

4. Exhaust-gas turbocharger, comprising a rotor block according to Claim 3, and comprising an outer bearing housing (30) with a central opening for receiving the rotor block, wherein, in at least one axial end surface (B) in the outer bearing housing, there are formed openings for the supply or discharge of various operating media to or from the inner bearing housing.

## Revendications

1. Logement de palier interne (40) d'un turbocompresseur à gaz d'échappement, comprenant une ouverture centrale pour recevoir un arbre ainsi que plusieurs ouvertures (44, 45, 46) pour acheminer ou évacuer différents fluides de travail vers ou depuis le logement de palier interne, les ouvertures (44, 45, 46) pour acheminer ou évacuer différents fluides de travail étant disposées dans des surfaces frontales axiales (A) du logement de palier interne, **caractérisé en ce que** les ouvertures respectives (44, 45, 46) pour acheminer ou évacuer différents fluides de travail sont prévues à chaque fois sous forme de réalisation double ou multiple et sont disposées sur des côtés différents du logement de palier interne.

2. Logement de palier interne (40) selon la revendication 1, dans lequel des ouvertures (45) pour acheminer de l'huile de lubrification sont disposées dans la moitié inférieure du logement de palier interne.

3. Bloc rotor d'un turbocompresseur à gaz d'échappement, comprenant un logement de palier interne (40) selon l'une quelconque des revendications 1 ou 2, ainsi qu'une roue de compresseur (20) et une roue de turbine (10) à chaque fois disposées sur un arbre supporté à rotation dans le logement de palier interne.

4. Turbocompresseur à gaz d'échappement, comprenant un bloc rotor selon la revendication 3, ainsi qu'un logement de palier externe (30) avec une ouverture centrale pour recevoir le bloc rotor, des ouvertures pour acheminer ou évacuer différents fluides de travail vers ou depuis le logement de palier interne étant pratiquées dans au moins une surface frontale axiale (B) dans le logement de palier externe.
